# EUROPEAN PATENT APPLICATION

(11) **EP 4 513 979 A1**
(43) Date of publication of application: **26.02.2025**
(21) Application number: 23792049.1
(22) Date of filing: 28.03.2023
(51) Int. Cl.: H04W 52/02, H04B 7/06, H04W 72/23, H04B 7/08, H04W 24/10, H04B 7/0408, H04L 1/00

(54) **METHOD FOR TRANSMITTING OR RECEIVING CHANNEL STATE INFORMATION AND APPARATUS THEREFOR**

(30) Priority: 22.04.2022 KR 20220050045; 10.08.2022 KR 20220100222; 28.09.2022 KR 20220123791; 03.11.2022 KR 20220145537
(71) Applicant: LG Electronics Inc., Yeongdeungpo-gu Seoul 07336 (KR)
(72) Inventor: KIM, Seonwook, Seoul 06772 (KR); KIM, Kijun, Seoul 06772 (KR); KIM, Jaehyung, Seoul 06772 (KR); YANG, Suckchel, Seoul 06772 (KR); KANG, Jiwon, Seoul 06772 (KR); PARK, Haewook, Seoul 06772 (KR); KIM, Kyuseok, Seoul 06772 (KR); CHUNG, Jaehoon, Seoul 06772 (KR)
(74) Representative: Jung, Minkyu
(86) International application number: PCT/KR2023/004085
(87) International publication number: WO 2023/204469

(57) **Abstract**

Disclosed is a method by which a terminal transmits channel state information (CSI) in a wireless communication system. In particular, the method comprises: receiving first information related to a channel state information-reference signal (CSI-RS) associated with N1 antenna ports; receiving second information related to first CSI reporting for the N1 antenna ports and third information related to second CSI reporting for N2 antenna ports, wherein the first CSI reporting and the second CSI reporting are both associated with the CSI-RS; receiving the CSI-RS on the basis of the first information; and transmitting at least one of first CSI based on the second information and the CSI-RS and second CSI based on the third information and the CSI-RS, wherein N2 is less than N1.

## Description

### TECHNICAL FIELD

The disclosure relates to a method and apparatus for transmitting and receiving channel state information (CSI), and more particularly, to a method and apparatus for transmitting and receiving CSI corresponding to some of antenna ports linked to a channel state information-reference signal (CSI-RS).

### BACKGROUND

As more and more communication devices demand larger communication traffic along with the current trends, a future-generation 5^{th} generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### Technical Problem

An object of the disclosure is to provide a method of transmitting and receiving channel state information and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

### Technical Solution

A method of transmitting channel state information (CSI) by a user equipment (UE) in a wireless communication system according to an embodiment of the disclosure may include receiving first information related to a channel state information-reference signal (CSI-RS) associated with N1 antenna ports, receiving second information related to first CSI reporting for the N1 antenna ports and third information related to second CSI reporting for N2 antenna ports, wherein both the first CSI reporting and the second CSI reporting are associated with the CSI-RS, receiving the CSI-RS based on the first information, and transmitting at least one of first CSI based on the second information and the CSI-RS and second CSI based on the third information and the CSI-RS. N2 may be smaller than N1

The N2 antenna ports may be determined from among the N1 antenna ports based on a bitmap received from a base station (BS).

Further, the second information and the third information may be included in a same CSI report configuration.

Further, the N2 antenna ports may be determined in descending order based on indexes of the N1 antenna ports.

Further, the method may include determining whether to transmit one of the first CSI and the second CSI or both the first CSI and the second CSI.

Further, information related to the transmitted at least one CSI of the first CSI and the second CSI may be included in CSI part 1.

A UE for transmitting CSI in a wireless communication system according to the disclosure may include at least one transceiver, at least one processor, and at least one memory operably connected to the at least one processor and storing instructions which when executed, cause the at least one processor to perform operations. The operations may include receiving first information related to a CSI-RS associated with N1 antenna ports through the at least one transceiver, receiving second information related to first CSI reporting for the N1 antenna ports and third information related to second CSI reporting for N2 antenna ports through the at least one transceiver, wherein both the first CSI reporting and the second CSI reporting are associated with the CSI-RS, receiving the CSI-RS based on the first information through the at least one transceiver, and transmitting at least one of first CSI based on the second information and the CSI-RS and second CSI based on the third information and the CSI-RS through the at least one transceiver. N2 may be smaller than N1 .

The N2 antenna ports may be determined from among the N1 antenna ports based on a bitmap received from a BS.

Further, the second information and the third information may be included in a same CSI report configuration.

Further, the N2 antenna ports may be determined in descending order based on indexes of the N1 antenna ports.

Further, the operations may include determining whether to transmit one of the first CSI and the second CSI or both the first CSI and the second CSI.

Further, information related to the transmitted at least one CSI of the first CSI and the second CSI may be included in CSI part 1.

An apparatus for transmitting CSI in a wireless communication system according to the disclosure may include at least one processor, and at least one memory operably connected to the at least one processor and storing instructions which when executed, cause the at least one processor to perform operations. The operations may include receiving first information related to a CSI-RS associated with N1 antenna ports, receiving second information related to first CSI reporting for the N1 antenna ports and third information related to second CSI reporting for N2 antenna ports, wherein both the first CSI reporting and the second CSI reporting are associated with the CSI-RS, receiving the CSI-RS based on the first information, and transmitting at least one of first CSI based on the second information and the CSI-RS and second CSI based on the third information and the CSI-RS. N2 may be smaller than N1.

A computer-readable storage medium according to the disclosure may include at least one computer programs causing at least one processor to perform operations. The operations may include receiving first information related to a CSI-RS associated with N1 antenna ports, receiving second information related to first CSI reporting for the N1 antenna ports and third information related to second CSI reporting for N2 antenna ports, wherein both the first CSI reporting and the second CSI reporting are associated with the CSI-RS, receiving the CSI-RS based on the first information, and transmitting at least one of first CSI based on the second information and the CSI-RS and second CSI based on the third information and the CSI-RS. N2 may be smaller than N1.

A method of receiving CSI by a BS in a wireless communication system according to an embodiment of the disclosure may include transmitting first information related to a CSI-RS associated with N1 antenna ports, transmitting second information related to first CSI reporting for the N1 antenna ports and third information related to second CSI reporting for N2 antenna ports, wherein both the first CSI reporting and the second CSI reporting are associated with the CSI-RS, transmitting the CSI-RS based on the first information, and receiving at least one of first CSI based on the second information and the CSI-RS and second CSI based on the third information and the CSI-RS through the at least one transceiver. N2 may be smaller than N1.

A BS for receiving CSI in a wireless communication system according to the disclosure may include at least one transceiver, at least one processor, and at least one memory operably connected to the at least one processor and storing instructions which when executed, cause the at least one processor to perform operations. The operations may include transmitting first information related to a CSI-RS associated with N1 antenna ports through the at least one transceiver, transmitting second information related to first CSI reporting for the N1 antenna ports and third information related to second CSI reporting for N2 antenna ports through the at least one transceiver, wherein both the first CSI reporting and the second CSI reporting are associated with the CSI-RS, transmitting the CSI-RS based on the first information through the at least one transceiver, and receiving at least one of first CSI based on the second information and the CSI-RS and second CSI based on the third information and the CSI-RS through the at least one transceiver. N2 may be smaller than N1.

### Advantageous Effects

According to the disclosure, power consumption of a BS may be reduced by providing a mechanism in which the BS dynamically turns on and off some antenna ports in consideration of communication states with associated UEs, a data amount, and so on.

It will be appreciated by persons skilled in the art that the effects that may be achieved with the disclosure are not limited to what has been particularly described hereinabove and other advantages of the disclosure will be more clearly understood from the following detailed description taken in conjunction with the accompanying drawings.

### BRIEF DESCRIPTION OF THE DRAWINGS

FIG. 1 is a diagram illustrating network energy saving.
FIG. 2 is a diagram illustrating analog beamforming in an NR system.
FIGS. 3 to 7 are diagrams illustrating beam management in an NR system.
FIGS. 8 to 10 are diagrams illustrating overall operation procedures of a user equipment (UE) and a base station (BS) according to an embodiment of the disclosure.
FIG. 11 illustrates an exemplary communication system applied to the disclosure.
FIG. 12 illustrates an exemplary wireless device applicable to the disclosure.
FIG. 13 illustrates an exemplary vehicle or autonomous driving vehicle applicable to the disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3^{rd} generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

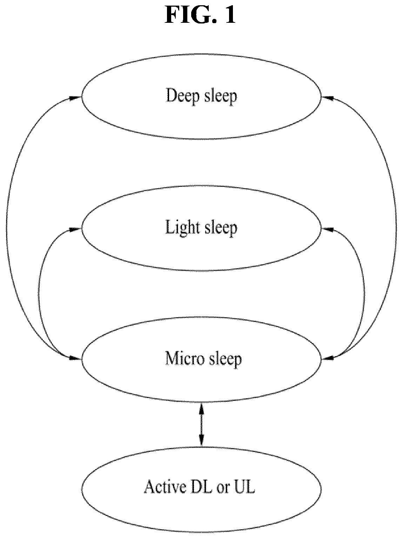

FIG. 1 is a diagram illustrating Network Energy Saving (NES) according to the disclosure.

It has been reported that a New Rat (NR) base station (BS) consumes 3 to 4 times more power than a Long Term Evolution (LTE) BS due to a higher density of installed BSs and use of more antennas/bandwidths/frequency bands in a comparison between the NR system and the LTE system. To solve the problem of the resulting increased operating costs for operators and build an eco-friendly network, a study item was approved to discuss methods of reducing energy consumption of BSs.

In 3GPP RAN WG1, an energy consumption model and simulation methodology for BSs was defined to show that energy consumption gains may be obtained by applying NES technology. Specifically, a sleep state (i.e., a state in which a BS does not perform either of transmission and reception) and an active state (i.e., a state in which the BS performs transmission and/or reception) were defined for BSs, and a transition method for each state was determined, as illustrated in FIG. 1. In addition, a relative power value consumed by a BS in each state, a time and energy required for state transition, and so on were modeled.

The techniques discussed in 3GPP RAN WG1 for NES may be largely classified into four domains (i.e., time/frequency/space/power domains), and the specific techniques for each domain may be summarized as in [Table 1].

**[Table 1]**

| **Time domain techniques** | |
|---|---|
| A-1 | Adaptation of common signals and channels |
| A-2 | Dynamic adaptation of UE specific signals and channels |
| A-3 | Wake up of gNB triggered by UE wake up signal |
| A-4 | Adaptation of DTX/DRX |
| A-5 | Adaptation of SSB/SIB1 |

| **Frequency domain techniques** | |
|---|---|
| B-1 | Multi-carrier energy savings enhancements |
| B-2 | Dynamic adaptation of bandwidth part of UE(s) within a carrier |
| B-3 | Dynamic adaptation of bandwidth of active BWP |

| **Spatial domain techniques** | |
|---|---|
| C-1 | Dynamic adaptation of spatial elements |
| C-2 | TRP muting/adaptation in multi-TRP operation |

| **Power domain techniques** | |
|---|---|
| D-1 | Adaptation of transmission power of signals and channels |
| D-2 | Enhancements to assist gNB digital pre-distortion |
| D-3 | Adaptation of transceiver processing algorithm |
| D-4 | PA backoff adaptation |
| D-5 | UE post-distortion |

As time domain NES techniques, methods have been discussed such as controlling on/off of a UE-common signal (e.g., SSB, SIB, paging, and so on) or a UE-specific signal (e.g., CSI-RS), such as A-1, A-2, and/or A-5 in Table 1, transmitting a wake-up signal to wake up a BS in an inactive state, such as A-3 in Table 1, or controlling transmission and reception of a UE according to a discontinuous transmission/discontinuous reception (DTX/DRX) pattern of a BS, such as A-4 in Table 1.

As frequency domain NES techniques, methods have been discussed such as an SCell operating without a synchronization signal block (SSB) in an inter-band CA situation, such as B-1 in Table 1, and switching a bandwidth part (BWP) or controlling the bandwidth of a BWP, such as B-2 and/or B-3 in Table 1.

As spatial domain NES techniques, methods of supporting per-antenna port on/off or per-transmission and reception point (TRP) on/off in a BS and improving associated CSI measurement and reporting, such as C-1 and/or C-2 in Table 1, have been discussed.

As power domain NES techniques, methods have been discussed such as increasing transmission efficiency by dynamically changing the power of downlink (DL) signals (e.g., SSB, CSI-RS, and PDSCH), such as D-1 in Table 1, or maximizing power amplifier (PA) efficiency by applying digital distortion compensation or tone reservation for a BS/UE, such as D-2, D-3, D-4 and/or D-5 in Table 1.

Apart from for the techniques (e.g., A-4, A-5, and B-1) commonly discussed in 3GPP RAN WG1 and 3GPP RAN WG2, the techniques discussed in 3GPP RAN WG2 for NES include a method of accessing NES-cells by NES-capable UEs or existing NR UEs, an efficient handover method for a UE being connected to an NES-cell, and so on.

As a result of the RAN#98-e meeting, the NES work items were approved and the discussion topics in each leading WG are as follows. The RAN WG1 leading items include methods (e.g., C-1 and D-1) of supporting on/off of BS antenna ports or dynamically changing a power offset between a physical downlink shared channel (PDSCH) and a channel state information-reference signal (CSI-RS), and enhancing CSI measurement and reporting. The RAN WG2 leading items include a method (e.g., A-4) of controlling transmission and reception of UEs according to a DTX/DRX pattern of a BS, a method of preventing existing NR UEs from accessing an NES-cell, and a conditional handover (CHO) method considering a source or target cell that performs an NES operation. In addition, the RAN WG3 leading items include a method of exchanging information about active beams between nodes and paging through a limited area. The RAN WG4 leading items include an SCell operating without an SSB in an inter-band CA situation (e.g., B-1).

In the NR system, a massive multiple input multiple output (MIMO) environment in which the number of transmission/reception (Tx/Rx) antennas is significantly increased may be under consideration. That is, as the massive MIMO environment is considered, the number of Tx/Rx antennas may be increased to a few tens or hundreds The NR system supports communication in an above 6 GHz band, that is, a millimeter frequency band. However, the millimeter frequency band is characterized by the frequency property that a signal is very rapidly attenuated according to a distance due to the use of too high a frequency band. Therefore, in an NR system operating at or above 6 GHz, beamforming (BF) is considered, in which a signal is transmitted with concentrated energy in a specific direction, not omni-directionally, to compensate for rapid propagation attenuation. Accordingly, there is a need for hybrid BF with analog BF and digital BF in combination according to a position to which a BF weight vector/precoding vector is applied, for the purpose of increased performance, flexible resource allocation, and easiness of frequency-wise beam control in the massive MIMO environment.

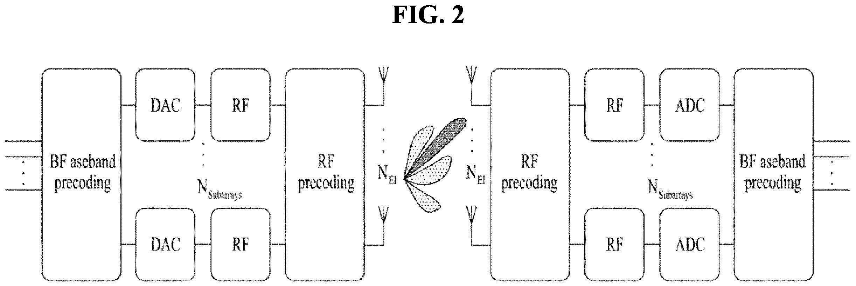

FIG. 2 is a block diagram illustrating an exemplary transmitter and receiver for hybrid BF.

To form a narrow beam in the millimeter frequency band, a BF method is mainly considered, in which a BS or a UE transmits the same signal through multiple antennas by applying appropriate phase differences to the antennas and thus increasing energy only in a specific direction. Such BF methods include digital BF for generating a phase difference for digital baseband signals, analog BF for generating phase differences by using time delays (i.e., cyclic shifts) for modulated analog signals, and hybrid BF with digital BF and analog beamforming in combination. Use of a radio frequency (RF) unit (or transceiver unit (TXRU)) for antenna element to control transmission power and phase control on antenna element basis enables independent BF for each frequency resource. However, installing TXRUs in all of about 100 antenna elements is less feasible in terms of cost. That is, a large number of antennas are required to compensate for rapid propagation attenuation in the millimeter frequency, and digital BF needs as many RF components (e.g., digital-to-analog converters (DACs), mixers, power amplifiers, and linear amplifiers) as the number of antennas. As a consequence, implementation of digital BF in the millimeter frequency band increases the prices of communication devices. Therefore, analog BF or hybrid BF is considered, when a large number of antennas are needed as is the case with the millimeter frequency band. In analog BF, a plurality of antenna elements are mapped to a single TXRU and a beam direction is controlled by an analog phase shifter. Because only one beam direction is generated across a total band in analog BF, frequency-selective BF may not be achieved with analog BF. Hybrid BF is an intermediate form of digital BF and analog BF, using B RF units fewer than Q antenna elements. In hybrid BF, the number of beam directions available for simultaneous transmission is limited to B or less, which depends on how B RF units and Q antenna elements are connected.

### Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.
- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

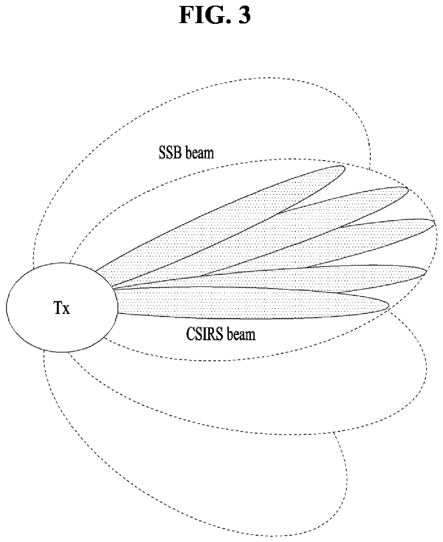

FIG. 3 is a diagram illustrating exemplary BF using an SSB and a CSI-RS.

Referring to FIG. 3, an SSB beam and a CSI-RS beam may be used for beam measurement. A measurement metric is the RSRP of each resource/block. The SSB may be used for coarse beam measurement, whereas the CSI-RS may be used for fine beam measurement. The SSB may be used for both Tx beam sweeping and Rx beam sweeping. SSB-based Rx beam sweeping may be performed by attempting to receive the SSB for the same SSBRI, while changing an Rx beam across multiple SSB bursts at a UE. One SS burst includes one or more SSBs, and one SS burst set includes one or more SSB bursts.

### 1. DL BM Using SSB

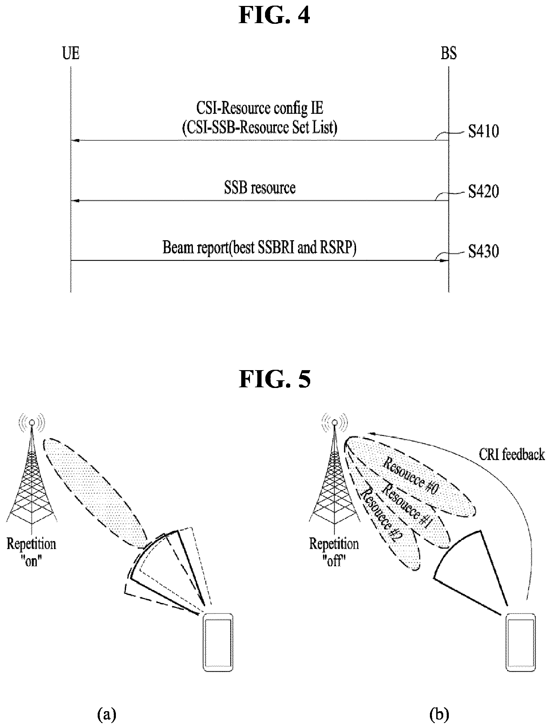

FIG. 4 is a diagram illustrating a signal flow for an exemplary DL BM procedure using an SSB.

An SSB-based beam report is configured during CSI/beam configuration in RRC _CONNECTED mode.
- A UE receives a CSI-ResourceConfig information element (IE) including CSI-SSB-ResourceSetList for SSB resources used for BM from a BS (S410). The RRC parameter, CSI-SSB-ResourceSetList is a list of SSB resources used for BM and reporting in one resource set. The SSB resource set may be configured as {SSBx1, SSBx2, SSBx3, SSBx4, ...}. SSB indexes may range from 0 to 63.
- The UE receives signals in the SSB resources from the BS based on CSI-SSB-ResourceSetList (S420).
- When CSI-RS reportConfig related to an SSBRI and RSRP reporting has been configured, the UE reports a best SSBRI and an RSRP corresponding to the best SSBRI to the BS (S430). For example, when reportQuantity in the CSI-RS reportConfig IE is set to 'ssb-Index-RSRP', the UE reports the best SSBRI and the RSRP corresponding to the best SSBRI to the BS.

When CSI-RS resources are configured in OFDM symbol(s) carrying an SSB and 'QCL-TypeD' is applicable to the CSI-RS resources and the SSB, the UE may assume that a CSI-RS and the SSB are quasi-co-located (QCLed) from the perspective of 'QCL-TypeD'. QCL-TypeD may mean that antenna ports are QCLed from the perspective of spatial Rx parameters. When the UE receives signals from a plurality of DL antenna ports placed in the QCL-TypeD relationship, the UE may apply the same Rx beam to the signals

### 2. DL BM Using CSI-RS

The CSI-RS serves the following purposes: i) when Repetition is configured and TRS_info is not configured for a specific CSI-RS resource set, the CSI-RS is used for BM; ii) when Repetition is not configured and TRS_info is configured for the specific CSI-RS resource set, the CSI-RS is used for a tracking reference signal (TRS); and iii) when either of Repetition or TRS_info is configured for the specific CSI-RS resource set, the CSI-RS is used for CSI acquisition.

When (the RRC parameter) Repetition is set to 'ON', this is related to the Rx beam sweeping process of the UE. In the case where Repetition is set to 'ON', when the UE is configured with NZP-CSI-RS-ResourceSet, the UE may assume that signals in at least one CSI-RS resource within NZP-CSI-RS-ResourceSet are transmitted through the same DL spatial domain filter. That is, the at least one CSI-RS resource within NZP-CSI-RS-ResourceSet is transmitted on the same Tx beam. The signals in the at least one CSI-RS resource within NZP-CSI-RS-ResourceSet may be transmitted in different OFDM symbols.

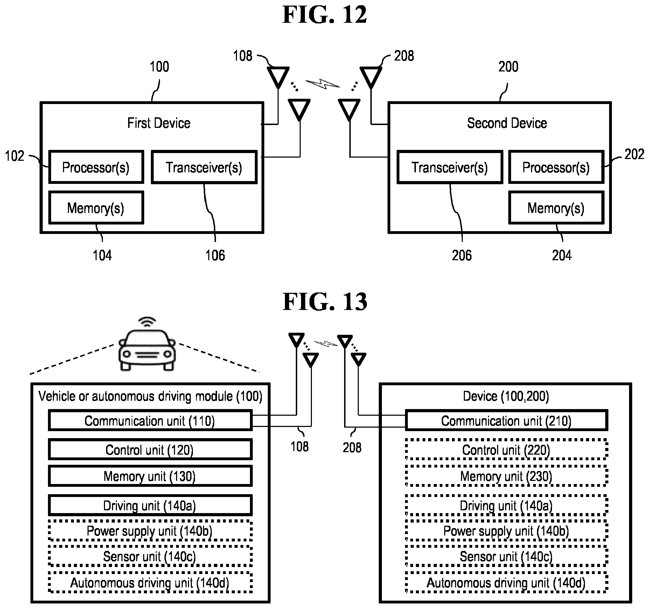

On the contrary, when Repetition is set to 'OFF', this is related to the Tx beam sweeping process of the BS. In the case where Repetition is set to 'OFF', the UE does not assume that signals in at least one CSI-RS resource within NZP-CSI-RS-ResourceSet are transmitted through the same DL spatial domain filter. That is, the signals in the at least one CSI-RS resource within NZP-CSI-RS-ResourceSet are transmitted on different Tx beams. FIG. 12 illustrates another exemplary DL BM procedure using a CSI-RS.

FIG. 5(a) illustrates an Rx beam refinement process of a UE, and FIG. 5(b) illustrates a Tx beam sweeping process of a BS. Further, FIG. 5(a) is for a case in which Repetition is set to 'ON', and FIG. 5(b) is for a case in which Repetition is set to 'OFF'.

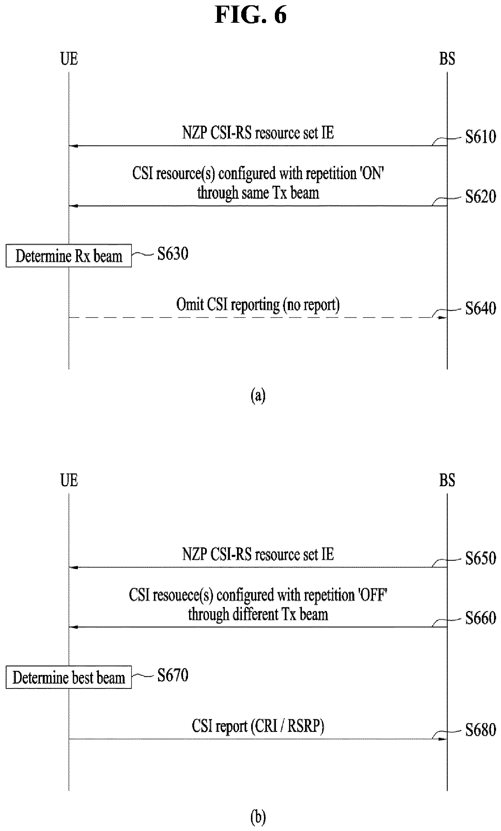

With reference to FIGS. 5(a) and 6(a), an Rx beam determination process of a UE will be described below.

FIG. 6(a) is a diagram illustrating a signal flow for an exemplary Rx beam determination process of a UE.
- The UE receives an NZP CSI-RS resource set IE including an RRC parameter 'Repetition' from a BS by RRC signaling (S610). The RRC parameter 'Repetition' is set to 'ON' herein.
- The UE repeatedly receives signals in resource(s) of a CSI-RS resource set for which the RRC parameter 'Repetition' is set to 'ON' on the same Tx beam (or DL spatial domain Tx filter) of the BS in different OFDM symbols (S620).
- The UE determines its Rx beam (S630).
- The UE skips CSI reporting (S640). That is, the UE may skip CSI reporting, when the RRC parameter 'Repetition' is set to 'ON'.

With reference to FIGS. 5(b) and 6(b), a Tx beam determination process of a BS will be described below.

FIG. 6(b) is a diagram illustrating an exemplary Tx beam determination process of a BS.
- A UE receives an NZP CSI-RS resource set IE including an RRC parameter 'Repetition' from the BS by RRC signaling (S650). When the RRC parameter 'Repetition' is set to 'OFF', this is related to a Tx beam sweeping process of the BS.
- The UE receives signals in resource(s) of a CSI-RS resource set for which the RRC parameter 'Repetition' is set to 'OFF' on different Tx beams (or DL spatial domain Tx filters) of the BS (S660).
- The UE selects (or determines) a best beam (S670).
- The UE reports the ID (e.g., CRI) of the selected beam and related quality information (e.g., an RSRP) to the BS (S680). That is, the UE reports a CRI and an RSRP corresponding to the CRI, when a CSI-RS is transmitted for BM.

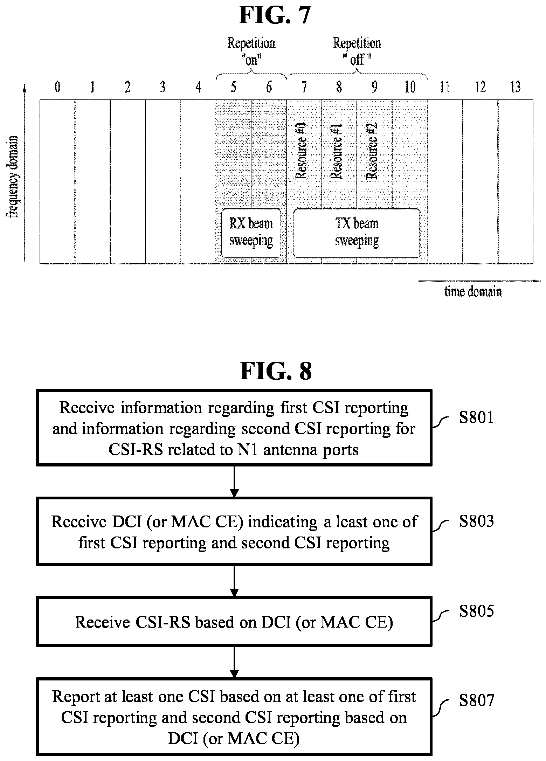

FIG. 7 is a diagram illustrating exemplary resource allocation in the time and frequency domains, which is related to the operation of FIG. 5.

When Repetition is set to 'ON' for a CSI-RS resource set, a plurality of CSI-RS resources may be repeatedly used on the same Tx beam, whereas when Repetition is set to 'OFF' for the CSI-RS resource set, different CSI-RS resources may be repeatedly transmitted on different Tx beams.

### 3. DL BM-Related Beam Indication

The UE may receive at least a list of up to M candidate transmission configuration indication (TCI) states for QCL indication by RRC signaling. M depends on a UE capability and may be 64.

Each TCI state may be configured with one RS set. Table 2 describes an example of a TCI-State IE. The TC-State IE is related to a QCL type corresponding to one or two DL RSs.

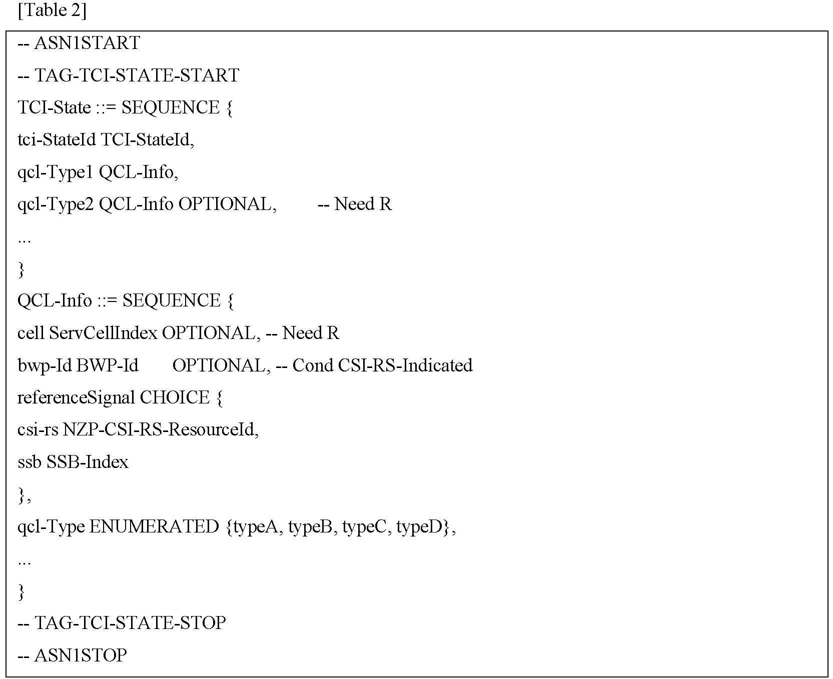

In Table 2, 'bwp-Id' identifies a DL BWP in which an RS is located, "cell" indicates a carrier in which the RS is located, and 'referencesignal' indicates reference antenna port(s) serving as a QCL source for target antenna port(s) or an RS including the reference antenna port(s). The target antenna port(s) may be for a CSI-RS, PDCCH DMRS, or PDSCH DMRS.

### 4. Quasi-Co Location (QCL)

The UE may receive a list of up to M TCI-State configurations to decode a PDSCH according to a detected PDCCH carrying DCI intended for a given cell. M depends on a UE capability.

As described in Table 2, each TCI-State includes a parameter for establishing the QCL relationship between one or more DL RSs and a PDSCH DM-RS port. The QCL relationship is established with an RRC parameter qcl-Type1 for a first DL RS and an RRC parameter qcl-Type2 for a second DL RS (if configured).

The QCL type of each DL RS is given by a parameter 'qc1-Type' included in QCL-Info and may have one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is for a specific NZP CSI-RS, the NZP CSI-RS antenna port may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

### DL Channel Structures

A BS transmits related signals on later-described DL channels to a UE, and the UE receives the related signals on the DL channels from the BS.

### (1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

### (2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.
- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.
- pdcch-DMRS-ScramblingID: provides information used for initialization of a PDCCH DMRS scrambling sequence.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 3 lists exemplary PDCCH SSs.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.
- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.

Table 4 illustrates exemplary DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0 _1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

Energy saving of a BS is considered important in wireless communication systems including 3GPP, because it may contribute to building eco-friendly networks by reducing carbon emissions and reducing the operational expenditure (OPEX) of communication industry players. In particular, as the introduction of 5G communication requires high transmission rates, BSs should be equipped with more antennas and provide services in wider bandwidths and frequency bands. As a result, the energy cost of a BS has reached 20% of the total OPEX according to a recent study. Due to this increased interest in BS energy saving, a new study item called "study on network energy savings" was approved in 3GPP NR release 18.

Specifically, the following enhancement techniques are under consideration in order to improve the energy saving capability of a BS from the perspective of transmission and reception.
- How to more efficiently apply one or more NES techniques in the time, frequency, spatial, and power domains based on UE assistance information and potential support/feedback from a UE, for a dynamic and/or semi-static operation and a finer granularity adaptation operation in transmission and reception -

For the purpose of NES, the BS may implement techniques such as controlling on/off for a predetermined duration on the time axis, controlling transmission/reception resources for a UE-common or UE-specific signal/channel, changing the amount of frequency resources, controlling transmission power, or turning antenna ports or TRPs on/off in the spatial domain. A state in which these techniques (defined as NES _techs, for convenience) are applied may be defined as an NES mode or an NES state.

The BS may indicate an applied NES_tech to the UE on an NES_tech basis or an NES_tech group basis (hereinafter, Approach 1), or preconfigure an NES_tech or NES_tech group corresponding to each code point of a specific indicator. The specific indicator may be indicated by DCI or a medium access control control element (MAC CE) or configured by higher layer signaling (hereinafter, Approach 2).

In Approach 1, when at least one NES_tech is applied, the UE may define a corresponding state as an NES mode or an NES state, or different NES modes or different NES states may be defined depending on which NES_tech are applied.

In Approach 2, for example, when there is a 1-bit indicator, '0' may indicate no corresponding NES_tech and '1' may be linked to one or more NES_techs. When '1' is indicated by the 1-bit indicator, the UE may define the corresponding state as an NES mode or an NES state.

In another example, when there is a 2-bit indicator, '00' may indicate no corresponding NES_tech, '01' may be lined to at least one NES_tech_A, '10' may be linked to at least one NES_tech_B, and '11' may be linked to at least one NES_tech_C. When a code point other than '00' is indicated by the 2-bit indicator, the UE may define the corresponding state as an NES mode or an NES state.

Further, when '01' is indicated by the 2-bit indicator, it may be defined as NES state #1, when '10' is indicated, it may be defined as NES state #2, and when '11' is indicated, it may be defined as NES state #3. In this manner, for each code point, it may be identified whether an NES state is indicated, or which NES state a current NES state is.

Particularly, the disclosure proposes a spatial domain BS energy saving method for DL communication.

In the disclosure, a scenario is mainly considered in which a BS obtains an NES gain by reducing the number of Tx antennas. For example, some Tx antenna elements of the BS may be turned off by turning on and off some antenna ports of a specific DL signal (e.g., CSI-RS) configured for a UE. As such, a power saving effect for the BS may be expected.

FIGS. 8 to 10 are diagrams illustrating an overall operation process of a UE and a BS according to the disclosure.

FIG. 8 is a diagram illustrating an overall operation process of a UE according to the disclosure.

Referring to FIG. 8, the UE may receive information regarding first CSI reporting and second CSI reporting for a CSI-RS related to N1 antenna ports (S801). For example, the first CSI reporting may be for the N1 antenna ports, and the second CSI reporting may be for N2 (<N1) antenna ports. For example, operation S801 may be based on at least one of [Method #2] to [Method #4] described below.

The UE may receive DCI and/or a MAC CE instructing to perform at least one of the first CSI reporting and the second CSI reporting (S803). For example, operation S803 may be based on [Method #1] described below.

The UE may receive the CSI-RS based on the received DCI and/or MAC CE (S805). Further, the UE may report at least one CSI based on the at least one of the first CSI reporting and the second CSI reporting according to the received DCI and/or MAC CE (S807).

For example, operations S805 and S807 may be based on at least one of [Method #1] to [Method #4] described below.

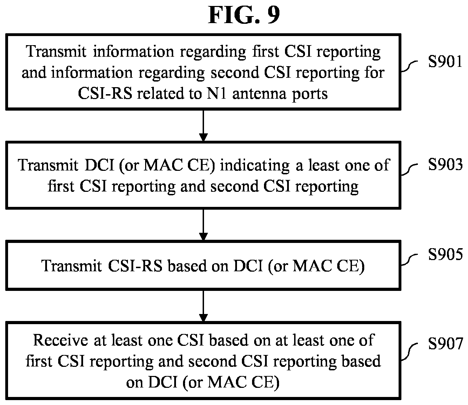

FIG. 9 is a diagram illustrating an overall operation process of a BS according to the disclosure.

Referring to FIG. 9, the BS may transmit information regarding first CSI reporting and second CSI reporting for a CSI-RS related to N1 antenna ports (S901). For example, the first CSI reporting may be for the N1 antenna ports, and the second CSI Reporting may be for N2 (<N1) antenna ports. For example, operation S901 may be based on at least one of [Method #2] to [Method #4] described below.

The BS may transmit DCI and/or a MAC CE instructing to perform at least one of the first CSI reporting and the second CSI reporting (S903). For example, operation S903 may be based on [Method #1] described below.

The BS may transmit the CSI-RS based on the transmitted DCI and/or MAC CE (S905). Further, the BS may receive at least one CSI based on the at least one of the first CSI reporting and the second CSI reporting according to the received DCI and/or MAC CE (S907).

For example, operations S905 and S907 may be based on at least one of [Method #1] to [Method #4] described below.

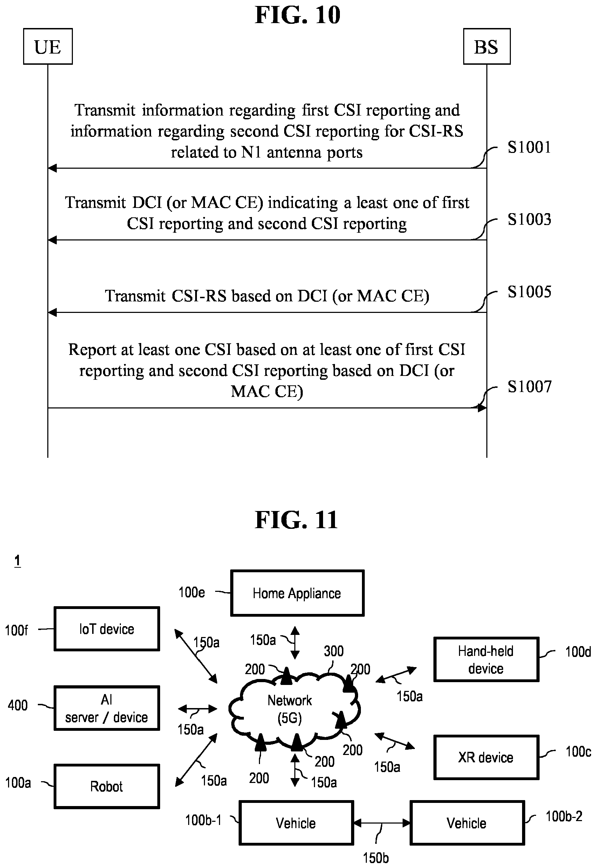

FIG. 10 is a diagram illustrating an overall operation process of a network according to the disclosure.

Referring to FIG. 10, a BS may transmit, to a UE, information regarding first CSI reporting and second CSI reporting for a CSI-RS related to N1 antenna ports (S1001). For example, the first CSI reporting may be for the N1 antenna ports, and the second CSI Reporting may be for N2 (<N1) antenna ports. For example, operation S1001 may be based on at least one of [Method #2] to [Method #4] described below.

The BS may transmit, to the UE, DCI and/or a MAC CE instructing the UE to perform at least one of the first CSI reporting and the second CSI reporting (S1003). For example, operation S1003 may be based on [Method #1] described below.

The BS may transmit the CSI-RS to the UE based on the DCI and/or MAC CE (S1005). Further, the UE may report at least one CSI based on the at least one of the first CSI reporting and the second CSI reporting according to the DCI and/or MAC CE (S1007).

For example, operations S1005 and S1007 may be based on at least one of [Method #1] to [Method #4] described below.

### [Method #1] Method of reducing power consumption of a BS by signaling an on/off indicator for antenna ports and/or panels and/or TRPs and/or pols of the BS

Per-CSI-RS resource on/off or per-CSI resource group on/off may adjust the number of TX antenna ports of the BS and thus control the power consumption of the BS. However, [Method #1] is intended to propose a method of saving energy of a BS by controlling on/off of some of N1 antenna ports for a CSI-RS resource or CSI-RS resource set configured with the N1 antenna ports.

Specifically, at least one of the following indication methods may be indicated by DCI and/or a MAC CE.

In addition to signaling described below, a timer/duration and/or a time-domain pattern indicator may be configured/indicated by DCI and/or a MAC CE (or may be preconfigured/predefined) to indicate how long a corresponding indication is to be applied. For example, fewer antenna ports than N1 may be used for transmission by applying the indication during T2 slots that is T1 slots after a reference time such as an HARQ-ACK corresponding to reception of the DCI or the MAC CE, and thereafter, all of the N1 antenna ports may be used for transmission. In addition, for example, it may be indicated fewer antenna ports than N1 are used for transmission by applying the indication during T2 slots, all of the N1 antenna ports are used for transmission during T3 slots, and the T2/T3 slot pattern is repeated. In another example, all of the N1 antenna ports may be used for transmission in even-indexed slots, and fewer antenna ports than N1 may be used for transmission in odd-indexed slots.

Now, a description will be given of a method of indicating on/off of some of N1 antenna ports.
- On/off of each antenna port or each antenna port group may be indicated by a bitmap. For example, the on/off of each antenna port may be controlled by an N1-bit bitmap. In another example, on/off of antenna ports may be controlled by an N2(<N1)-bit bitmap in consideration of signaling overhead, and the index of an antenna port linked to each bit may be preconfigured or determined by a rule. For example, for N2=2, a first bit may be a bit for turning on/off even-indexed antenna ports, and a second bit may be a bit for turning on/off odd-indexed antenna ports. Alternatively, the first bit may be a bit for turning on/off {N1/2} or fewer antenna ports (or antenna ports with indexes equal to or lower than 2999+{N1/2}, considering that the antenna port indexes start from 3000), and the second bit may be a bit for turning on/off the other antenna ports.
- An N3-bit field may be used to indicate on/off of antenna ports, and for each of the 2^(N3) code points, the index of an antenna port to be turned on or off may be preconfigured. For N3=1, when '0' is signaled, it may mean that all of the N1 antenna ports are turned on, and when '1' is signaled, it means that predetermined ones of the N1 antenna ports or {N1/2} or fewer antenna ports (or antenna ports with indexes equal to or lower than 2999+{N1/2}, considering that the antenna port indexes start from 3000) are turned on.

An indication to turn on/off some of the N1 antenna ports may be applied after a certain time of an application delay from reception of DCI or a MAC CE including the indication. For example, the UE may expect that some of the N1 antenna ports will be turned on/off according to the indication from a time point that is K1 symbols/slots/msec after a reception time of the DCI or MAC CE, where K1 is predefined/preconfigured or reported by UE capability signaling, or turned on/off from a slot or slot group boundary closest to the time point that isK1 symbols/slots/msec after the reception time of the DCI or MAC CE.

In another example, the UE may expect that some of the N1 antenna ports will be turned on/off according to the indication from a time point that is K1 symbols/slots/msec after a transmission time of an HARQ-ACK feedback for the received MAC CE or DCI, where K1 is predefined/preconfigured or reported by UE capability signaling, or turned on/off from a slot or slot group boundary closest to the time point that is K1 symbols/slots/msec after the transmission time of the HARQ-ACK feedback for the received MAC CE or DCI.

When the timer/duration and/or time-domain pattern indicator is not configured, the application delay may be applied. However, even when the timer/duration and/or time-domain pattern indicator is configured, the application delay may be applied.

In the above methods, when it is said that specific antenna ports are turned on, this may mean that the UE reports only CSI (e.g., RI, PMI and/or CQI) for the turned-on antenna ports, when performing CSI reporting. To this end, *codebookConfig* corresponding to a corresponding CSI-RS resource or CSI-RS resource set may be individually configured for each candidate number of antenna ports that may be turned on.

For example, a situation is assumed in which a predetermined number of antenna ports may be turned on, and another predetermined number of antenna ports may be turned off according to [Method #1]. Three different *codebookConfigs* may be individually configured for a corresponding CSI-RS resource or CSI-RS resource set for which N1, N2, or N3 antenna ports may be turned on. Further, configuring different *codebookConfigs* means that codebook subset restriction and/or rank indication (RI) restriction may be configured differently according to the number of antenna ports. Regarding the codebook subset restriction and/or RI restriction in the disclosure, in the case of a type I single panel codebook, codebook restriction may be configured specifically by bitmap parameters such as *twoTX-CodebookSubsetRestriction, typeI-SinglePanel-riRestriction, nl-n2, and typeI-SinglePanel-codebookSubsetRestricfion-i2.* Further, in the case of a type I multi-panel codebook, codebook restriction may be configured by bitmap parameters such *as ng-nl-n2 and ri-Restriction*ng*-*n1-n2. Further, in the case of a type II codebook, codebook restriction may be configured by bitmap parameters such as *nl-n2-codebookSubsetRestriction, typeII-RIRestriction, nl-n2, and typeI-SinglePanel-codebookSubsetRestriction-i2,* and/or parameters such as *typeII-PortSelection, phaseAlphabetSize, subbandAmplitude, and numberOfBeams.*

Therefore, when the UE receives signaling that only N2 antenna ports are turned on for a corresponding CSI-RS resource or CSI-RS resource set by an indication in [Method #1], the UE may calculate CSI for the CSI-RS resource or CSI-RS resource set based on a *codebookConfig* configuration corresponding to the N2 antenna ports, and report the calculated CSI to the BS.

Considering that different *codebookConfig* configuration information is required for each number of turned-on antenna ports as described above, information indicating antenna ports to be turned on in [Method #1] may be replaced with information about which *codebookConfig* configuration information to be used among a plurality of pieces of *codebookConfig* configuration information.

For example, four different pieces of *codebookConfig* configuration information may be preconfigured, and the UE may identify the number of turned-on antenna ports and the indexes of the turned-on antenna ports according to indicated *codebookConfig* configuration information among the four pieces of *codebookConfig* configuration information. Further, the UE may calculate CSI based on the corresponding *codebookConfig* configuration and report the calculated CSI to the BS.

Even when the number of panels configured for the UE is N1, information about which panel to turn on and off may be transmitted to the UE in a similar manner. Specifically, at least one of the following indication methods may be indicated by DCI and/or a MAC CE.

In addition to signaling described below, a timer/duration and/or a time-domain pattern indicator may be configured/indicated by DCI and/or a MAC CE (or may be preconfigured/predefined) to indicate how long a corresponding indication is to be applied.

For example, fewer panels than N1 may be used for transmission by applying the indication during T1 slots, and thereafter, all of N1 panels may be used for transmission. In addition, for example, it may be indicated fewer panels than N1 are used for transmission by applying the indication during T2 slots, all of the N1 panels are used for transmission during T3 slots, and the T2/T3 slot pattern is repeated. In another example, all of the N1 panels may be used for transmission in even-indexed slots, and fewer antenna ports than N1 may be used for transmission in odd-indexed slots.

Now, a description will be given of a method of indicating on/off of some of N1 panels.
- On/off of each panel or each panel group may be indicated by a bitmap. For example, the on/off of each panel may be controlled by an N1-bit bitmap. In another example, on/off of panels may be controlled by an N2(<N1)-bit bitmap in consideration of signaling overhead, and the index of a panel linked to each bit may be preconfigured or determined by a rule. For example, for N2=2, a first bit may be a bit for turning on/off even-indexed panels, and a second bit may be a bit for turning on/off odd-indexed panels. Alternatively, the first bit may be a bit for turning on/off {N1/2} or fewer panels, and the second bit may be a bit for turning on/off the other panels.
- An N3-bit field may be used to indicate on/off of panels, and for each of the 2^(N3) code points, the index of a panel to be turned on or off may be preconfigured. For N3=1, when '0' is signaled, it may mean that all of the N1 panels are turned on, and when '1' is signaled, it means that predetermined ones of the N1 panels or only one panel with a predefined/preconfigured specific index is turned on.

An indication to turn on/off some of the N1 panels may be applied after a certain time of an application delay from reception of DCI or a MAC CE including the indication. For example, the UE may expect that some of the N1 panels will be turned on/off according to the indication from a time point that is K1 symbols/slots/msec after a reception time of the DCI or MAC CE, where K is predefined/preconfigured or reported by UE capability signaling, or turned on/off from a slot or slot group boundary closest to the time point that is K1 symbols/slots/msec after the reception time of the DCI or MAC CE.

In another example, the UE may expect that some of the N1 panels will be turned on/off according to the indication from a time point that is K1 symbols/slots/msec after a transmission time of an HARQ-ACK feedback for the received MAC CE or DCI, where K is predefined/preconfigured or reported by UE capability signaling, or turned on/off from a slot or slot group boundary closest to the time point that is K1 symbols/slots/msec after the transmission time of the HARQ-ACK feedback for the received MAC CE or DCI.

When the timer/duration and/or time-domain pattern indicator is not configured, the application delay may be applied. However, even when the timer/duration and/or time-domain pattern indicator is configured, the application delay may be applied.

In the above methods, when it is said that specific panels are turned on, this may mean that the UE reports only CSI (e.g., RI, PMI and/or CQI) corresponding to a CSI-RS resource or CSI-RS resource set for antenna ports linked to the turned-on panels, when performing CSI reporting.

To this end, *codebookConfig* corresponding to a corresponding panel may be individually configured for each candidate number of panels that may be turned on.

For example, a situation is assumed in which a predetermined number of panels may be turned on, and another predetermined number of panels may be turned off according to [Method #1]. When N1, N2, or N3 panels may be turned on, three different *codebookConfigs* may be individually configured for each number of panels.

Further, configuring different *codebookConfigs* means that codebook subset restriction and/or rank indication (RI) restriction may be configured differently according to the number of panels.

Therefore, when the UE receives signaling that only N2 panels are turned on for a corresponding CSI-RS resource or CSI-RS resource set by an indication in [Method #1], the UE may calculate CSI for the CSI-RS resource or CSI-RS resource set based on a *codebookConfig* configuration corresponding to the N2 panels, and report the calculated CSI to the BS.

Considering that different *codebookConfig* configuration information is required for each number of turned-on panels as described above, information indicating panels to be turned on in [Method #1] may be replaced with information about which *codebookConfig* configuration information to be used among a plurality of pieces of *codebookConfig* configuration information.

For example, four different pieces of *codebookConfig* configuration information may be preconfigured, and the UE may identify the number of turned-on panels and the indexes of the turned-on panels according to indicated *codebookConfig* configuration information among the four pieces of *codebookConfig* configuration information. Further, the UE may calculate CSI based on the corresponding *codebookConfig* configuration and report the calculated CSI to the BS.

Characteristically, there is a mode that supports multiple panels in the case of a type-I codebook. In this case, the UE may recognize a mapping relationship between panels and antenna ports. For example, in the case of a type-I multi-panel codebook as illustrated in [Table 5], the UE may recognize the indexes of antenna ports corresponding to each panel as in a right column. N_g may represent the number of panels, and N_1 x N_2 x 2 may represent the number of antenna ports for each panel.

For example, in the case where (N_g, N_1, N_2) is set to (4,2,2), when the UE is instructed to turn on only panel index #1 by the above signaling, the UE may assume that only 8 antenna ports with antenna port indexes #(3000 + 0/1/2/3/16/17/18/19) are turned on for a corresponding CSI-RS resource or CSI-RS resource set, calculate CSI based on a *codebookConfig* configuration corresponding to the corresponding panel index or number of antenna ports, and report the calculated CSI to the BS.

**[Table 5]**

| Number of CSI-RS antenna ports, P_{CSI-RS} | (N_{g}, N₁, N₂) | (O₁,O₂) | Panel-to-port mapping (port 3000 is represented as 0, and port 3001 is represented as 1) |
|---|---|---|---|
| 8 | (2,2,1) | (4,1) | 0/1/4/5 >> panel #1 |
| | | | 2/3/6/7/ >> panel #2 |
| | | | or |
| | | | 0/1/2/3 >> panel#1 |
| | | | 4/5/6/7 >> panel#2 |
| 16 | (2,4,1) | (4,1) | 0/1/2/3/8/9/10/11 >> panel#1 |
| | | | 4/5/6/7/12/13/14/15 >> panel#2 |
| | | | or |
| | | | 0/1/2/3/4/5/6/7 >> panel#1 |
| | | | 8/9/10/11/12/13/14/15 >> panel#2 |
| | (4,2,1) | (4,1) | 0/1/8/9 >> panel#1 |
| | | | 2/3/10/11 >> panel#2 |
| | | | 4/5/12/13 >> panel#3 |
| | | | 6/7/14/15 >> panel#4 |
| | | | or |
| | | | 0/1/2/3 >> panel#1 |
| | | | 4/5/6/7 >> panel#2 |
| | | | 8/9/10/11 >> panel#3 |
| | | | 6/7/14/15 >> panel#4 |
| | (2,2,2) | (4,4) | 0/1/2/3/8/9/10/11 >> panel#14/5/6/7/12/13/14/15 >> panel#2 |
| | | | or |
| | | | 0/1/2/3/4/5/6/7 >> panel#1 |
| | | | 8/9/10/11/12/13/14/15 >> panel#2 |
| 32 | (2,8,1) | (4,1) | 0/1/2/3/4/5/6/7/16/17/18/19/20/21/22/23 >> panel#1 |
| | | | 8/9/10/11/12/13/14/15/24/25/26/27/28/29/30/31 >> panel#2 |
| | | | or |
| | | | 0/1/2/3/4/5/6/7/8/9/10/11/12/13/14/15 >> panel#1 |
| | | | 16/17/18/19/20/21/22/23/24/25/26/27/28/29/30/31 >> panel#2 |
| | (4,4,1) | (4,1) | 0/1/2/3/16/17/18/19 >> panel#1 |
| | | | 4/5/6/7/20/21/22/23 >> panel#2 |
| | | | 8/9/10/11/24/25/26/27 >> panel#3 |
| | | | 12/13/14/15/28/29/30/31 >> panel#4 |
| | | | or |
| | | | 0/1/2/3/4/5/6/7 >> panel#1 |
| | | | 8/9/10/11/12/13/14/15 >> panel#2 |
| | | | 16/17/18/19/20/21/22/23 >> panel#3 |
| | | | 24/25/26/27/28/29/30/31 >> panel#4 |
| | (2,4,2) | (4,4) | 0/1/2/3/4/5/6/7/16/17/18/19/20/21/22/23 >> panel#18/9/10/11/12/13/14/15/24/25/26/27/28/29/30/31 >> panel#2 |
| | | | or |
| | | | 0/1/2/3/4/5/6/7/8/9/10/11/12/13/14/15 >> panel#1 |
| | | | 16/17/18/19/20/21/22/23/24/25/26/27/28/29/30/31 >> panel#2 |
| | (4,2,2) | (4,4) | 0/1/2/3/16/17/18/19 >> panel#14/5/6/7/20/21/22/23 >> panel#2 |
| | | | 8/9/10/11/24/25/26/27 >> panel#3 |
| | | | 12/13/14/15/28/29/30/31 >> panel#4 |
| | | | or |
| | | | 0/1/2/3/4/5/6/7 >> panel#1 |
| | | | 8/9/10/11/12/13/14/15 >> panel#2 |
| | | | 16/17/18/19/20/21/22/23 >> panel#3 |
| | | | 24/25/26/27/28/29/30/31 >> panel#4 |

When there are a plurality of TRPs configured for DL reception at the UE, an on/off state for each TRP may be indicated by DCI and/or a MAC CE. Similarly to the above methods, an on/off state for each TRP, CORESET pool index, TRP group, or CORESET pool index group may be indicated by bitmap information. Further, a per-TRP on/off state may be indicated by each code point of a field. When off is indicated for a specific TRP, at least one of the following behaviors (hereinafter, 'Beh') may be applied.
- Beh1) In the case where a plurality of CORESET pool indexes are configured for the UE, when a specific TRP or a specific CORESET pool index is signaled to be off, the UE may not perform PDCCH monitoring or may not be required to perform PDCCH monitoring in a PDCCH monitoring occasion linked to a CORESET with a CORESET pool index linked to the TRP.
- Beh2) In the case where a plurality of CORESET pool indexes are configured for the UE, when a specific TRP or a specific CORESET pool index is signaled to be off, for an HARQ-ACK codebook linked to a CORESET pool index linked to the TRP, the UE may not generate or report the HARQ-ACK codebook or HARQ-ACK sub-codebook to the BS. That is, the UE may report HARQ-ACK information to the BS by generating only an HARQ-ACK codebook or HARQ-ACK sub-codebook linked to a CORESET pool index linked to an on-state TRP.
- Beh3) In the case where a plurality of CORESET pool indexes are configured for the UE, when a specific TRP or a specific CORESET pool index is signaled to be off, the UE may not receive DL RS #1 configured as a QCL source of a PDCCH DM-RS linked to a CORESET with a CORESET pool index linked to the TRP and/or a DL signal/channel for which DL RS #1 is configured as a QCL source. Alternatively, a TCI state for which DL RS #1 is configured as a QCL source may be ignored, and DCI indicating the TCI state may be ignored or reception of a PDSCH to which the TCI state is applied may be handled as invalid. Alternatively, the UE may not receive a PDSCH to which the TCI state is applied.
- Beh4) In the case where a plurality of CORESET pool indexes are configured for the UE, when a specific TRP or a specific CORESET pool index is signaled to be off, the UE may discontinue a radio link monitoring (RLM) and/or link recovery procedure linked to a CORESET with a CORESET pool index linked to the TRP.
- Beh5) In the case where a plurality of CSI-RS resources are configured in a single CSI-RS resource set, with some CSI-RS resources linked to TRP#1 and the remaining CSI-RS resources linked to TRP#2, when off is indicated for TRP#1, the UE may perform reception and/or CSI reporting only for the CSI-RS resources linked to TRP#2 in the CSI-RS resource set, without performing reception and/or CSI reporting for the CSI-RS resources linked to TRP#1.
- Beh6) For a CSI-RS of a specific usage (e.g., beam management), each CSI-RS resource set may be linked to a TRP. A plurality of CSI-RS resource sets may be configured, with some CSI-RS resource sets linked to TRP#1 and the remaining CSI-RS resource sets linked to TRP#2. In this case, when off is indicated for TRP#1, the UE may perform reception only for the CSI-RS resource sets linked to TRP#2 and/or a procedure configured for/associated with the CSI-RS resource sets linked to TRP#2, without performing reception for the CSI-RS resource sets linked to TRP#1 and/or a procedure configured for/associated with the CSI-RS resource sets linked to TRP#1.

For a UE configured to transmit and/or receive through multiple TRPs, switching between single-TRP and multi-TRP in terms of data transmission and reception may be indicated by UE-specific DCI that schedules a PDSCH or a PUSCH. For example, when a TCI state linked to an index indicated by a TCI field is linked to a plurality of signals/channels, this may mean a multi-TRP operation, and when the linked TCI state is linked to a single signal/channel, this may mean a single-TRP operation.

In another example, single-TRP or multi-TRP may be indicated by an indicator in a separate field (e.g., an SRS resource set indicator field) of DCI. The UE may assume that on/off of a TRP is indicated by the indication, and one or more of Beh1 to Beh6 may be applied.

Further, when switching between single-TRP and multi-TRP in terms of data transmission and reception may be indicated by UE-specific DCI that schedules a PDSCH or a PUSCH, whether the UE may identify TRP on/off based on the indication may be configured by higher layer signaling.

In another method, the on/off state of each pol in a cross-polarization antenna structure may be indicated by DCI and/or a MAC CE. Similarly to the above methods, on/off of each pol (i.e., a / direction pol or a \ direction pol) may be indicated by bitmap information, and a per-pol on/off state may be indicated by each code point of a field. This may mean that when the UE performs CSI reporting, the UE may report only CSI (e.g., RI, PMI, and CQI) for a CSI-RS resource or CSI-RS resource set corresponding to antenna ports linked to a corresponding turned-on pol.

In the above methods, the on/off indicator for an antenna port and/or panel and/or TRP and/or pol of the UE may be transmitted UE-specifically, UE group-commonly, or cell-specifically by DCI or a MAC CE signaled by the BS.

A carrier/serving cell carrying the DCI or MAC CE may be different from a carrier/serving cell in which an on/off operation for an antenna port and/or panel and/or TRP and/or pole of the BS is performed, and an on/off operation for an antenna port and/or panel and/or TRP and/or pole in a plurality of carriers/serving cells may be indicated by the DCI or MAC CE.

A common on/off operation for an antenna port and/or panel and/or TRP and/or pole (e.g., an on/off operation for antenna ports and/or panels and/or TRPs and/or pols of the same index) may be indicated for a plurality of carriers/serving cells, or a different on/off operation for an antenna port and/or panel and/or TRP and/or pol may be indicated for each carrier/serving cell. In the case of the DCI, it may be scrambled with a UE-specific, UE group-common, or cell-specific RNTI prior to transmission. In the case of the MAC CE, it may be transmitted through a PDSCH scheduled by DCI scrambled with a UE-specific, UE group-common, or cell-specific RNTI (the PDSCH may also be scrambled with a UE-specific, UE group-common, or cell-specific RNTI). Further, a bit location in the MAC CE at which an on/off indicator for an antenna port and/or panel and/or TRP and/or pol is signaled may be preconfigured.

The above method may be linked to a DRX configuration. For example, after an antenna port and/or panel and/or TRP and/or pol to be turned on/off is configured for each DRX configuration under a plurality of DRX configurations (e.g., DRX configuration #1 and DRX configuration #2), when a specific DRX configuration is activated, the UE may perform CSI-RS reception and CSI reporting according to an on/off configuration for an antenna port and/or panel and/or TRP and/or pol linked to the DRX configuration.

Alternatively, even in one DRX configuration, a configuration for an antenna port and/or panel and/or TRP and/or pol to be turned on/off may be applied/configured differently depending on whether it is a DRX active time (e.g., a time period during which an onDurationtimer and/or an inactivitytimer is running or a time period during which the UE should be awake for transmission and/or reception). That is, within the DRX active time (or outside the DRX active time), the UE may follow an on/off configuration for a linked antenna port and/or panel and/or TRP and/or pol, and perform CSI-RS reception and CSI reporting accordingly. For example, within the DRX active time, the UE may follow an on/off configuration for an antenna port and/or panel and/or TRP and/or pol linked to the DRX active time, and perform CSI-RS reception and CSI reporting accordingly. Conversely, outside the DRX active time, the UE may follow an on/off configuration for an antenna port and/or panel and/or TRP and/or pol linked to a corresponding DRX inactive time, and perform CSI-RS reception and CSI reporting accordingly.

The above method may be linked to a BWP configuration. For example, after an antenna port and/or panel and/or TRP and/or pol to be turned on/off is configured for each BWP under a plurality of BWP configurations (e.g., BWP #1 and BWP #2), when a specific BWP configuration is activated or switching to a specific BWP is performed, the UE may perform CSI-RS reception and CSI reporting according to an on/off configuration for an antenna port and/or panel and/or TRP and/or pol linked to the corresponding BWP configuration.

Although an antenna port and/or panel and/or TRP and/or pol to be turned on/off is indicated as in the above method, an actual on/off state may not be aligned between the BS and the UE in an on-off state transition period. To address this problem, a rule may be defined to report all of CSI to be reported prior to transition and CSI to be reported after transition during a certain transition period (which may be predefined or preconfigured). In this regard, from the perspective of BS transmission, the UE may assume that during the transition period, all antenna ports and/or panels and/or TRPs and/or pols corresponding to the union of antenna ports and/or panels and/or TRPs and/or poles to be turned on at time points before and after the transition are used for transmission, or a PDSCH is scheduled based on the antenna ports and/or panels and/or TRPs and/or pols corresponding to the union.

The transition period may be related to an application delay. That is, when an application delay equal to the length of the transition period is applied, and on/off of an antenna port and/or panel and/or TRP and/or pol is indicated accordingly, the UE may apply the on/off of the antenna port and/or panel and/or TRP and/or pol indicated by an indicator including the indication after a time equal to the transition period (i.e., application delay) has elapsed from a time when the UE receives the indicator. The UE may assume that during the transition period (i.e., application delay), all antenna ports and/or panels and/or TRPs and/or pols corresponding to the union of antenna ports and/or panels and/or TRPs and/or poles to be turned on at the time points before and after the transition as described above are used for transmission, or a PDSCH is scheduled based on the antenna ports and/or panels and/or TRPs and/or pols corresponding to the union.

When the indicator is received through DCI or a MAC CE, the UE may turn on/off the antenna ports and/or panels and/or TRPs and/or poles by applying the indicator from a time point that is K1 symbols/slots/msec after a reception time of the DCI or MAC CE including the indicator, where K1 is predefined/preconfigured or reported by UE capability signaling, or from a closest slot or slot-group boundary after the transition period from the time point that is K1 symbols/slots/msec after the reception time of the DCI or MAC CE. Alternatively, the UE may turn on/off the antenna ports and/or panels and/or TRPs and/or poles by applying the indicator from the time point that is K1 symbols/slots/msec after the reception time of the DCI or MAC CE including the indicator, where K1 is predefined/preconfigured or reported by the UE capability signaling, or from a closest slot or slot-group boundary after the later one of the time point that is K1 symbols/slots/msec after the reception time of the DCI or MAC CE and a time point after the transition period from the reception time of the DCI or MAC CE.

In another example, the UE may turn on/off the antenna ports and/or panels and/or TRPs and/or pols by applying the indicator from a time point that is K2 symbols/slots/msec after a transmission time of an HARQ-ACK feedback corresponding to the MAC CE or DCI, where K2 is predefined/preconfigured or reported by UE capability signaling, or from a closest slot or slot group boundary after the transition period from the time point that isK2 symbols/slots/msec after the transmission time of the HARQ-ACK feedback corresponding to the MAC CE or DCI. Alternatively, the UE may turn on/off the antenna ports and/or panels and/or TRPs and/or pols by applying the indicator from the time point that is K2 symbols/slots/msec after from the reception time of the MAC CE or DCI, where K2 is predefined/configured or reported by UE capability signaling, or from a slot or slot group boundary closest to the later one of the time point that is K2 symbols/slots/msec after the reception time of the DCI or MAC CE and a time point after the transition period from the reception time of the DCI or MAC CE.

In turning on/off an antenna port or panel/pol for a specific CSI-RS resource as in the above proposed method, an operation of linking an SRS resource may also be considered. For example, when a specific SRS resource or SRS resource set is linked to a CSI-RS resource or CSI-RS resource set, and a specific antenna port or panel/pol for the specific CSI-RS resource or CSI-RS resource set is turned on/off, an antenna port or panel/pol corresponding to the SRS resource or SRS resource set which is indicated or associated with the CSI-RS resource or CSI-RS resource set may also be turned on/off. The association between them may mean that an association may be preconfigured/predefined separately for them, there is a QCL source/target relationship between them, or an RS for spatial relation information is configured for them, and a correspondence relationship between antenna ports or panels/pols may also be preconfigured/predefined.

### [Method #2] Method of reducing power consumption of a BS by supporting a CSI reporting using only some of antenna ports for configured CSI-RS or supporting a CSI reporting using combination of antenna ports configured for a plurality of CSI-RSs

For example, for a CSI-RS configured with N1 antenna ports, a CSI reporting using all of the N1 antenna ports and a CSI reporting using only N2 (<N1) antenna ports may be configured simultaneously. Accordingly, the UE may perform a plurality of CSI reportings for the CSI-RS. Even if the BS uses only the N2 antenna ports for transmission among the N1 antenna ports depending on a situation, the BS may perform stable PDSCH scheduling without an additional reporting configuration because the BS already receives a CSI report corresponding to the N2 antenna ports from the UE. This method is referred to as antenna port decomposition, for convenience.

In another example, for CSI-RS #1 configured with N1 antenna ports and CSI-RS #2 configured with N2 antenna ports, a CSI reporting using all of the N1 antenna ports and a CSI reporting using all of the N2 antenna ports may be configured, respectively. At the same time, a CSI reporting using all {N1+N2} antenna ports for CSI-RS #1 and CSI-RS #2 may be configured, so that the UE may perform a plurality of CSI reportings for a corresponding CSI-RS. Even if the BS transmits only the N1 or N2 antenna ports among the {N1+N2} antenna ports depending on a situation, the BS may perform stable PDSCH scheduling without an additional reporting configuration because the BS already receives a CSI report corresponding to the N1 or N2 antenna ports from the UE. This method is referred to as antenna port combination, for convenience.

First, antenna port decomposition may be implemented by the following methods.

A plurality of *codebookConfigs* may be configured in one *CSI-ReportConfig.* For example, one may correspond to N1 antenna ports, and another one may correspond to N2 antenna ports. When the UE performs CSI reporting configured for the *CSI-ReportConfig,* it may perform CSI reporting based on the assumption that a linked CSI-RS is transmitted through the N1 antenna ports and CSI reporting based on the assumption that the linked CSI-RS is transmitted through the N2 antenna ports, at once.

Two different *CSI-ReportConfigs* may be configured for one CSI-RS resource or CSI-RS resource set transmitted through N1 antenna ports. For example, *codebookConfig* based on the N1 antenna ports may be configured by one *CSI-ReportConfig, and codebookConfig* based on N2 antenna ports may be configured by another *CSI-ReportConfig.* In CSI reporting configured for a specific *CSI-ReportConfig,* when *codebookConfig* configured in the *CSI-ReportConfig* is based on the N1 antenna ports, the UE may perform CSI reporting based on the assumption that a CSI-RS is transmitted through the N1 antenna ports, and when the *codebookConfig* configured in the *CSI-ReportConfig* is based on the N2 antenna ports, the UE may perform CSI reporting based on the assumption that the CSI-RS is transmitted through the N2 antenna ports.

In the disclosure, when it is said that *codebookConfig* is based on M antenna ports, this may mean that codebook subset restriction or RI restriction is configured according to M, and for example, when four-four-TypeI-SinglePanel-Restriction is configured, it may mean that M=32.

In the above proposals, for CSI-RS reception and CSI reporting based on the assumption of only the N2 antenna ports out of the N1 antenna ports, a rule of determining the indexes of the N2 antenna ports out of the indexes of the N1 antenna ports may be required. The rule may be predefined or preconfigured. For example, when N1=32 and N2=16, 16 index values may be preconfigured. Alternatively, they may be determined as antenna ports with even or odd indexes or 16 antenna port indexes sequentially from the lowest index. For example, the N2 antenna ports may be determined as antenna ports with the lowest index 3000 to index 3015.

Antenna port combination may be implemented by the following method.

A plurality of CSI-RS resource sets may be configured in one *CSI-ReportConfig.* For example, CSI-RS resource set #1 corresponding to N1 antenna ports and CSI-RS resource set #2 corresponding to N2 antenna ports may be configured.

*CodebookConfigs* based on N1, N2, and {N1+N2} antenna ports may be configured respectively, and when N1=N2, only one *codebookConfig* based on N1/N2 antenna ports may be configured. That is, three *codebookConfigs* based on N1, N2, and {N1+N2} antenna ports may be configured. However, when N1=N2, two *codebookConfigs* based on N2 (or N1) antenna ports and {N1+N2} antenna ports may be configured.

When performing CSI reporting configured for corresponding *CSI-ReportConfig,* the UE may perform CSI reporting based on the assumption of transmission of CSI-RS resources of CSI-RS resource set #1, CSI reporting based on the assumption of transmission of CSI-RS resources of CSI-RS resource set #2, and CSI reporting based on the assumption of transmission of a CSI-RS through {N1+N2} antenna ports for linked CSI-RS resources (i.e., CSI-RS resource set #1 + CSI-RS resource set #2), at once.

In the above methods, the BS may indicate by DCI or a MAC CE whether for the UE to report CSI for which antenna port decomposition and/or antenna port combination is performed or CSI for which it is not performed (i.e., CSI before antenna port decomposition or antenna port combination is performed). The DCI or MAC CE may be transmitted UE-specifically, UE group-commonly, or cell-specifically. A carrier/serving cell carrying the DCI or MAC CE may be different from a carrier/serving cell in which an antenna port on/off operation is performed, and antenna port decomposition and/or antenna port combination operations for a plurality of carriers/serving cells may be indicated by the DCI or MAC CE.

A common antenna port decomposition and/or antenna port combination operation may be indicated for a plurality of carriers/serving cells, or a different antenna port decomposition and/or antenna port combination operation may be indicated for each carrier/serving cell. In the case of the DCI, it may be scrambled with a UE-specific, UE group-common, or cell-specific RNTI prior to transmission. In the case of the MAC CE, it may be transmitted through a PDSCH scheduled by DCI scrambled with a UE-specific, UE group-common, or cell-specific RNTI (the PDSCH may also be scrambled with a UE-specific, UE group-common, or cell-specific RNTI). In addition, information about a bit location in the MAC CE may be preconfigured, to which an indication is mapped, indicating whether CSI for which antenna port decomposition and/or antenna port combination is performed or CSI for which it is not performed (i.e., CSI before antenna port decomposition or antenna port combination is performed) is to be reported.

A method of indicating on/off of an antenna port according to antenna port decomposition and/or antenna port combination may follow [Method #1].

For example, on/off may be indicated for each antenna port, each antenna port group, or each CSI reporting by a bitmap. For example, per-antenna port on/off or per-CSI reporting on/off may be controlled by an N1-bit bitmap. In another example, on/off of antenna ports or CSI reportings may be controlled by an N2(<N1)-bit bitmap in consideration of signaling overhead, and the index of an antenna port or CSI reporting linked to each bit may be preconfigured or determined by a rule. For example, when N2=2, a first bit may be a bit to turn on/off an even-indexed antenna port or an even-indexed CSI reporting, and a second bit may be a bit to turn on/off an odd-indexed antenna port or an odd-indexed CSI reporting. Alternatively, Alternatively, the first bit may be a bit for turning on/off {N1/2} or fewer antenna ports or CSI reportings (or antenna ports or CSI reportings with indexes equal to or lower than 2999+{N1/2}, considering that the antenna port indexes start from 3000), and the second bit may be a bit for turning on/off the other antenna ports or CSI reportings.

Further, an N3-bit field may be used to indicate on/off of antenna ports or CSI reportings, and for each of the 2^(N3) code points, the index of an antenna port or CSI reporting to be turned on or off may be preconfigured. For N3=1, when '0' is signaled, it may mean that all of the N1 antenna ports or CSI reportings are turned on, and when '1' is signaled, it means that predetermined ones of the N1 antenna ports or CSI reportings or {N1/2} or fewer antenna ports or CSI reportings are turned on.

An indication to turn on/off some of the N1 antenna ports or CSI reportings may be applied after a certain time of an application delay from reception of DCI or a MAC CE including the indication. For example, the UE may expect that some of the N1 antenna ports or CSI reportings will be turned on/off according to the indication from a time point that is symbols/slots/msec after a reception time of the DCI or MAC CE, where K1 is predefined/preconfigured or reported by UE capability signaling, or turned on/off from a slot or slot group boundary closest to the time point that is K1 symbols/slots/msec after the reception time of the DCI or MAC CE.

In another example, the UE may expect that some of the N1 antenna ports or CSI reportings will be turned on/off according to the indication from a time point that is K1 symbols/slots/msec after a transmission time of an HARQ-ACK feedback for the received MAC CE or DCI, where K1 is predefined/preconfigured or reported by UE capability signaling, or turned on/off from a slot or slot group boundary closest to the time point that is K1 symbols/slots/msec after the transmission time of the HARQ-ACK feedback for the received MAC CE or DCI.

When a timer/duration and/or time-domain pattern indicator is not configured, the application delay may be applied. However, even when the timer/duration and/or time-domain pattern indicator is configured, the application delay may be applied.

In the disclosure, when the antenna port decomposition and/or antenna port combination method is performed, different CSI reporting indexes may be assigned depending on which method is performed or not performed, for convenience. In an example, for a CSI-RS configured with N1 antenna ports, a CSI reporting using all of the N1 antenna ports, a CSI reporting using only N2 (<N1) antenna ports, and a CSI reporting using only N3 (<N2) antenna ports may be configured at the same time.

The CSI reporting corresponding to the N1 antenna ports, the CSI reporting corresponding to the N2 antenna ports, and the CSI reporting corresponding to the N3 antenna ports may be indexed with CSI reporting index #0, CSI reporting index #1, and CSI reporting index #2, respectively. In another example, for CSI-RS #1 configured with the N1 antenna ports and CSI-RS #2 configured with the N2 antenna ports, a CSI reporting using the N1 antenna ports, a CSI reporting using the N2 antenna ports, and a CSI reporting using all of the N1 or N2 antenna ports may be indexed with CSI reporting index #0, CSI reporting index #1, and CSI reporting index #2, respectively.

In the above methods, whether to report CSI for which antenna port decomposition and/or antenna port combination is performed or CSI for which antenna port decomposition or antenna port combination is not performed (i.e., CSI before antenna port decomposition or antenna port combination is performed) may be determined by the UE's selection. For example, one CSI reporting index advantageous for efficient data transmission may be selected by comparing RI/PMI/CQI/SINR information corresponding to CSI reporting indexes #0, #1, and #2, and a CSI reporting corresponding to the selected CSI reporting index may be performed. The CSI report may include the CSI reporting index corresponding to the CSI. When the amount of CSI to be fed back may be different according to a CSI reporting index, information about the corresponding CSI reporting index is preferably included in CSI part 1. Since CSI part 1 has a fixed payload size, the BS may identify the size of CSI payload included in CSI part 2 from the information about the CSI reporting index included in CSI part 1. The CSI payload included in CSI part 2 may be fed back by the UE.

The UE may feed back CSI corresponding to one or more CSI reporting indexes according to a BS configuration or a predefined rule. For example, when a plurality of CSI reporting indexes are configured for specific *CSI-ReportConfig,* the UE may feed back CSI reports corresponding to all CSI reporting indexes or a plurality of CSI reporting indexes. Specifically, the UE may report CSI corresponding to best N CSI reporting indexes based on specific CSI (e.g., RI/LI/CRI/PMI/CQI) to the BS. A specific N value may be predefined, or configured/indicated by the BS. Further, when the amount of CSI to be fed back may be different depending on a CSI reporting index, information about a CSI reporting index corresponding to actual CSI to be fed back is preferably included in CSI part 1. Since CSI part 1 has a fixed payload size, the BS may identify the size of CSI payload included in CSI part 2 from the information about the CSI reporting index included in CSI part 1. The CSI payload included in CSI part 2 may be fed back by the UE.

Additionally, to reduce feedback overhead, CSI (e.g., RI/LI/CRI/PMI/CQI) corresponding to a specific CSI reporting index may be fully reported, while CSI corresponding to the remaining CSI reporting indexes may be reported as offset values from the "CSI corresponding to the specific CSI reporting index." The specific CSI reporting index may be predefined (e.g., as a lowest or highest CSI reporting index), or the BS may configure/indicate a specific value by higher layer signaling or L1/L2 signaling such as DCI/a MAC-CE. Alternatively, the UE may select a specific CSI reporting index and report it together with the CSI. Alternatively, the UE may select a CSI reporting index with the best or worst CSI as the specific CSI reporting index, report CSI with the specific CSI reporting index, and report CSI corresponding to the remaining CSI reporting indexes as offset values from the "CSI corresponding to the specific CSI reporting index."

The above method may be linked to a DRX configuration. For example, whether to perform antenna port decomposition and/or antenna port combination is configured for each DRX under a plurality of DRX configurations (e.g., DRX configuration #1 and DRX configuration #2). Then, when a specific DRX configuration is activated, the UE may perform CSI-RS reception and CSI reporting according to an antenna port decomposition and/or antenna port combination configuration linked to the DRX configuration.

Alternatively, even in one DRX configuration, whether to perform antenna port decomposition and/or antenna port combination may be applied differently depending on whether it is a DRX active time (e.g., a time period during which an onDurationtimer and/or an inacitivitytimer are running, or a time period during which the UE should be awake for transmission and/or reception). That is, within the DRX active time (or outside the DRX active time), the UE may perform CSI-RS reception and CSI reporting according to a linked antenna port decomposition and/or antenna port combination configuration. For example, within the DRX active time, the UE may perform CSI-RS reception and CSI reporting according to an antenna port decomposition and/or antenna port combination configuration linked to the DRX active time. Conversely, outside the DRX active time, the UE may perform CSI-RS reception and CSI reporting according to an antenna port decomposition and/or antenna port combination configuration linked to a corresponding DRX inactive time.

The above method may be linked to a BWP configuration. For example, whether to perform antenna port decomposition and/or antenna port combination is configured for each BWP under a plurality of BWP configurations (e.g., BWP configuration #1 and BWP configuration #2). Then, when a specific DRX configuration is activated or switching to a specific BWP is performed, the UE may perform CSI-RS reception and CSI reporting according to an antenna port decomposition and/or antenna port combination configuration linked to the BWP configuration.

In turning on/off an antenna port or panel/pol for a specific CSI-RS resource as in the above proposed method, an operation of linking an SRS resource may also be considered. For example, when a specific SRS resource or SRS resource set is linked to a CSI-RS resource or CSI-RS resource set, and a specific antenna port or panel/pol for the specific CSI-RS resource or CSI-RS resource set is turned on/off, an antenna port or panel/pol corresponding to the SRS resource or SRS resource set that is indicated or associated with the CSI-RS resource or CSI-RS resource set may also be turned on/off. The association between them may mean that an association may be preconfigured/predefined separately for them, there is a QCL source/target relationship between them, or an RS for spatial relation information is configured for them, and a correspondence relationship between antenna ports or panels/pols may also be preconfigured/predefined.

### [Method #3] Method of dividing an N-port CSI-RS into an N1-port CSI-RS and an N2-port CSI-RS\ (N1+N2 = N) and transmitting the N1-port CSI-RS and the N2-port CSI-RS in TDM

For example, when the BS periodically transmits an N-port CSI-RS every T msec, it should operate N antenna ports, thereby causing much power consumption. However, when the BS divides the N-port CSI-RS into an N1-port CSI-RS and an N2-port CSI-RS (N1+N2 = N) and periodically transmits the N1-port CSI-RS every T1 msec and the N2-port CSI-RS every T2 msec, the number of antenna ports that the BS should operate at one time is reduced, thereby reducing the power consumption. The UE may perform CSI reporting corresponding to the N-port CSI-RS by combining the N1-port CSI-RS transmitted every T1 msec and the N2-port CSI-RS transmitted every T2 msec. N1/N2/T1/T2 values may be predefined by a rule or configured by higher layer signaling. Although the method of dividing one N-port CSI-RS into two CSI-RSs has been described in this example, it may be easily extended to a method of dividing one CSI-RS into three or more CSI-RSs.

In another example, when there are a plurality of TRPs configured for DL reception at the UE, a slot or symbol with a different index may be used for each TRP, and thus the BS may turn on only some TRPs instead of turning on all of the plurality of TRPs at once, thereby enhancing an energy saving effect. For example, when the BS informs the UE that only TRP #1 operates in even-indexed slots and only TRP #2 operates in odd-indexed slots, the UE may only expect DL signal/channel reception from a TRP corresponding to each slot and UL signal/channel transmission to the corresponding TRP.

**[Method #4] When repetition is set to 'OFF' for a CSI-RS resource set configured for beam management, a BS may apply a different beam (i.e., different spatial domain filter) to each CSI-RS resource. When the number of antenna ports is changeable as in [Method #1], the time-axis resource amount of CSI-RS resources corresponding to a CSI-RS resource set may be changed according to the number of antenna ports turned on according to the CSI-RS resource set. Specifically, as the number of turned-on antenna ports decreases, the time-axis resource amount may decrease.**

**[Table 6]**

| |
|---|
| **5.1.6.1.2CSI-RS for L1-RSRP and L1-SINR computation** |
| If a UE is configured with a *NZP-CSI-RS-ResourceSet* configured with the higher layer parameter *repetition* set to 'on', the UE may assume that the CSI-RS resources, described in Clause 5.2.2.3.1, within the *NZP-CSI-RS-ResourceSet* are transmitted with the same downlink spatial domain transmission filter, where the CSI-RS resources in the *NZP-CSI-RS-ResourceSet* are transmitted in different OFDM symbols. If *repetition* is set to 'off', the UE shall not assume that the CSI-RS resources within the *NZP-CSI-RS-ResourceSet* are transmitted with the same downlink spatial domain transmission filter. |
| If the UE is configured with a *CSI-ReportConfig* with *reportQuantity* set to 'cri-RSRP', 'cri-SINR' or 'none' and if the *CSI-ResourceConfig* for channel measurement (higher layer parameter *resourcesForChannelMeasurement*) contains a *NZP-CSI-RS-ResourceSet* that is configured with the higher layer parameter *repetition* and without the higher layer parameter *trs-Info,* the UE can only be configured with the same number (1 or 2) of ports with the higher layer parameter *nrofPorts* for all CSI-RS resources within the set. If the UE is configured with the CSI-RS resource in the same OFDM symbol(s) as an SS/PBCH block, the UE may assume that the CSI-RS and the SS/PBCH block are quasi co-located with 'typeD' if 'typeD' is applicable. Furthermore, the UE shall not expect to be configured with the CSI-RS in PRBs that overlap with those of the SS/PBCH block, and the UE shall expect that the same subcarrier spacing is used for both the CSI-RS and the SS/PBCH block. |

Table 6 is an excerpt from the 3GPP TS 38.214 specification. A parameter repetition may be configured for a CSI-RS resource set configured for beam management (e.g., a CSI-RS resource set configured for L1-RSRP or L1-signal interference to noise ratio (SINR) calculation). In the case where the parameter repetition is set to on, when the UE receives at least one CSI-RS resource included in the CSI-RS resource set, the BS may transmit at least one CSI-RS resource using the same DL spatial-domain transmission filter. On the contrary, in the case where the parameter repetition is set to off, when the UE receives at least one CSI-RS resource included in the CSI-RS resource set, the BS may transmit at least one CSI-RS resource using a different DL spatial-domain transmission filter for each CSI-RS resource.

Accordingly, when the parameter repetition is set to on, the UE may detect a best Rx beam for receiving a corresponding CSI-RS resource, while changing an Rx beam (or spatial-domain Rx filter) of the UE. When the parameter repetition is set to off, the UE may determine a best CSI-RS resource corresponding to a corresponding Rx beam, while fixing or changing the Rx beam (or spatial-domain RX filter) of the UE and report it to the BS.

When the BS turns off some antenna elements, antenna ports, panels, or TRPs, reception of a smaller number of CSI-RSs than in the case where all antenna elements, antenna ports, panels, or TRPs are turned on may be sufficient to perform beam management based on the above-described parameter repetition.

For example, it may be preconfigured that 6 CSI-RS resources are configured in a CSI-RS resource set configured for beam management and/or that the parameter repetition is set to off and a CSI-RS is transmitted in symbols #0/#2/#4/#6/#8/# 10 of a specific slot. In this case, when the BS operates all N1 antenna ports, it may be necessary to apply different DL Tx beams through the 6 CSI-RS resources. However, when the BS operates only N2 (<N1) antenna ports, even if different DL Tx beams are applied through fewer than 6 CSI-RS resources, it may be sufficient to perform beam management. When the UE is capable of recognizing that the number of antenna ports, panels, or TRPs of the BS is changed by signaling such as DCI or a MAC CE based on a method such as [Method #1], the number of valid CSI-RS resources in the CSI-RS resource set may be different depending on the number of antenna ports, panels, or TRPs.

Specifically, when only the N2 (<N1) antenna ports are activated, the CSI-RS may be received only in symbols #0/#2/#4/#6, and not received in symbols #8/#10. Further, when only N3 (<N2) antenna ports are activated, the CSI-RS may be received only in symbols #0/#2 and not received in symbols #4/#6/#8/#10.

The above method may be equally extended to a CSI-RS resource set for which the parameter repetition is set to on. For example, it may be preconfigured that 6 CSI-RS resources are configured in a CSI-RS resource set configured for beam management and/or that the parameter repetition is set to on and CSI-RS resources are transmitted in symbols #0/#2/#4/#6/#8/#10 of a specific slot.

In this case, when the BS operates all of the N1 antenna ports, it may be necessary to apply different DL Tx beams through the 6 CSI-RS resources. However, when the BS operates only the N2 (<N1) antenna ports, the beam width is different for each CSI-RS resource, and thus application of only different DL Rx beams through fewer than 6 CSI-RS resources may be sufficient to perform beam management. When the UE is capable of recognizing that the number of antenna ports, panels, or TRPs of the BS is changed by signaling such as DCI or a MAC CE based on a method such as [Method #1], the number of valid CSI-RS resources in the CSI-RS resource set may be different depending on the number of antenna ports, panels, or TRPs.

Specifically, when only the N2 (<N1) antenna ports are activated, a CSI-RS may be received only in symbols #0/#2/#4/#6 and not received through symbols #8/#10. Further, when only the N3 (<N2) antenna ports are activated, the CSI-RS may be received only in symbols #0/#2 and not received in symbols #4/#6/#8/#10.

The correlation between the on/off state of an antenna port, panel, or TRP and the validity of each CSI-RS resource in a CSI-RS resource set for beam management as described above may be predetermined by a rule or preconfigured. For example, when the ratio between N1 and N2 is 2:1, the first three CSI-RS resources (e.g., symbols for receiving the first three CSI-RS resources) of 6 CSI-RS resources (e.g., symbols for receiving the 6 CSI-RS resources) in a slot may be determined to be valid. Further, when the ratio between N1 and N3 is 3:1, the first two CSI-RS resources (e.g., symbols for receiving the first two CSI-RS resources) of 6 CSI-RS resources (e.g., symbols for receiving the 6 CSI-RS resources) in a slot may be determined to be valid.

For example, the BS may set Repetition to 'Off' for the UE by higher layer signaling, and configure a plurality of CSI reportings as in [Method #2] or CSI-RS resources of a CSI-RS resource set for the UE.

The BS may indicate a CSI reporting, a CSI-RS resource set, or a CSI-RS resource to be turned on/off by DCI and/or a MAC CE as in [Method #1]. The BS may indicate the CSI reporting, CSI-RS resource set, or CSI-RS resources to be turned on/off by a bitmap or an N3-bit field as in [Method #1].

The BS may indicate on/off of a CSI-RS resource by DCI and/or a MAC CE to save time resources. For example, when all CSI-RS resources included in a CSI-RS resource set occupy 10 slots or symbols, the BS may instruct to turn on only CSI-RS resources allocated to odd-indexed slots or symbols or only CSI-RS resources allocated to even-indexed slots or symbols among the 10 slots or symbols. Alternatively, the BS may instruct to turn on only CSI-RS resources allocated to slots or symbols at an interval of N from the first slot or symbol. As the BS transmits CSI-RS resources at intervals of a predetermined number of slots or symbols in this manner, the BS may only have to turn antenna ports on/off at the predetermined interval, thereby reducing its power consumption.

In this case, the UE may estimate CSI for slots or symbols within a predetermined interval, in which CSI-RS resources are not received, based on CSI for slots or symbols in which CSI-RS resources are received. For example, when only CSI-RS resources allocated to even-indexed slots or symbols are turned on, the UE may calculate a CSI estimate for odd-indexed slots or symbols based on the CSI-RS resources received in the even-indexed slots or symbols. Alternatively, when the UE reports the CSI for the received CSI-RS resources, the BS may estimate the CSI for the slots or symbols where the CSI-RS is not transmitted, based on the reported CSI.

In another example, it may be instructed to turn on only CSI-RS resources allocated to the first or last N slots or symbols of 10 slots or symbols occupied by all CSI-RS resources included in a CSI-RS resource set.

When the BS is capable of estimating a channel environment to a certain level or higher with only CSI for the last N slots or symbols, the BS may transmit a CSI-RS only in the last N slots or symbols, while turning off an antenna in the remaining slots or symbols. Therefore, the BS may reduce power consumption.

According to [Method #1] to [Method #4], the number of antenna ports for each CSI-RS resource set or CSI-RS resource linked to a CSI reporting is made different, or when one CSI-RS resource set is linked to one CSI reporting, a CSI reporting for some antenna ports is additionally configured, so that CSI reportings corresponding to different numbers of antenna ports are performed as needed. Accordingly, the BS may transmit a CSI-RS using only corresponding antenna ports, thereby reducing the use of TX antennas of the BS and enhancing the power saving effect.

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 11 illustrates a communication system 1 applied to the disclosure.

Referring to FIG. 11, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

FIG. 12 illustrates wireless devices applicable to the disclosure.

Referring to FIG. 12, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, instructions and/or operations, controlled by the processor 102 of the first wireless device 100 and stored in the memory 104 of the first wireless device 100, according to an embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 102 may receive information about first CSI reporting and second CSI reporting for a CSI-RS related to N1 antenna ports through the transceiver 106. For example, the first CSI reporting may be related to the N1 antenna ports, and the second CSI reporting may be related to N2 (<N1) antenna ports. For example, the above operation of the processor 102 may be based on at least one of [Method #2] to [Method #4].

The processor 102 may receive DCI and/or a MAC CE indicating at least one of the first CSI reporting and the second CSI reporting through the transceiver 106. For example, the above operation of the processor 102 may be based on [Method #1].

The processor 102 may receive the CSI-RS based on the received DCI and/or MAC CE through the transceiver 106. Further, the processor 102 may report at least one CSI based on the at least one of the first CSI reporting and the second CSI reporting based on the received DCI and/or MAC CE.

For example, the above operation of the processor 102 may be based on at least one of [Method #1] to [Method #4].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an embodiment of the disclosure will be described.

Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 202 may transmit information regarding first CSI reporting and second CSI reporting for a CSI-RS related to N1 antenna ports through the transceiver 206. For example, the first CSI reporting may be related to the N1 antenna ports, and the second CSI reporting may be related to N2 (<N1) antenna ports. For example, the above operation of the processor 202 may be based on at least one of [Method #2] to [Method #4].

The processor 202 may transmit DCI and/or a MAC CE indicating at least one of the first CSI reporting and the second CSI reporting through the transceiver 206. For example, the above operation of the processor 202 may be based on [Method #1].

The processor 202 may receive the CSI-RS based on the DCI and/or MAC CE through the transceiver 206. Further, the processor 202 may receive at least one CSI based on the at least one of the first CSI reporting and the second CSI reporting based on the DCI and/or MAC CE through the transceiver 206.

For example, the above operation of the processor 202 may be based on at least one of [Method #1] to [Method #4].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 13 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 13, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', "access point', etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

While the above-described method of transmitting and receiving reference signals for channel state information and the apparatus therefor have been described based on an example applied to a 5G NR system, the method and apparatus are applicable to various wireless communication systems in addition to the 5G NR system.

## Claims

1. A method of transmitting channel state information (CSI) by a user equipment (UE) in a wireless communication system, the method comprising:
receiving first information related to a channel state information-reference signal (CSI-RS) associated with N1 antenna ports;
receiving second information related to first CSI reporting for the N1 antenna ports and third information related to second CSI reporting for N2 antenna ports, wherein both the first CSI reporting and the second CSI reporting are associated with the CSI-RS;
receiving the CSI-RS based on the first information; and
transmitting at least one of first CSI based on the second information and the CSI-RS and second CSI based on the third information and the CSI-RS,
wherein N2 is smaller than N1.

2. The method according to claim 1, wherein the N2 antenna ports are determined from among the N1 antenna ports based on a bitmap received from a base station (BS).

3. The method according to claim 1, wherein the second information and the third information are included in a same CSI report configuration.

4. The method according to claim 1, wherein the N2 antenna ports are determined in descending order based on indexes of the N1 antenna ports.

5. The method according to claim 1, comprising:
determining whether to transmit one of the first CSI and the second CSI or both the first CSI and the second CSI.

6. The method according to claim 1, wherein information related to the transmitted at least one CSI of the first CSI and the second CSI is included in CSI part 1.

7. A user equipment (UE) for transmitting channel state information (CSI) in a wireless communication system, the UE comprising:
at least one transceiver;
at least one processor; and
at least one memory operably connected to the at least one processor and storing instructions which when executed, cause the at least one processor to perform operations,
wherein the operations include:
receiving first information related to a channel state information-reference signal (CSI-RS) associated with N1 antenna ports through the at least one transceiver;
receiving second information related to first CSI reporting for the N1 antenna ports and third information related to second CSI reporting for N2 antenna ports through the at least one transceiver, wherein both the first CSI reporting and the second CSI reporting are associated with the CSI-RS;
receiving the CSI-RS based on the first information through the at least one transceiver; and
transmitting at least one of first CSI based on the second information and the CSI-RS and second CSI based on the third information and the CSI-RS through the at least one transceiver, and
wherein N2 is smaller than N1.

8. The UE according to claim 7, wherein the N2 antenna ports are determined from among the N1 antenna ports based on a bitmap received from a base station (BS).

9. The UE according to claim 7, wherein the second information and the third information are included in a same CSI report configuration.

10. The UE according to claim 7, wherein the N2 antenna ports are determined in descending order based on indexes of the N1 antenna ports.

11. The UE according to claim 7, wherein the operations include determining whether to transmit one of the first CSI and the second CSI or both the first CSI and the second CSI.

12. The UE according to claim 7, wherein information related to the transmitted at least one CSI of the first CSI and the second CSI is included in CSI part 1.

13. An apparatus for transmitting channel state information (CSI) in a wireless communication system, the apparatus comprising:
at least one processor; and
at least one memory operably connected to the at least one processor and storing instructions which when executed, cause the at least one processor to perform operations,
wherein the operations include:
receiving first information related to a channel state information-reference signal (CSI-RS) associated with N1 antenna ports;
receiving second information related to first CSI reporting for the N1 antenna ports and third information related to second CSI reporting for N2 antenna ports, wherein both the first CSI reporting and the second CSI reporting are associated with the CSI-RS;
receiving the CSI-RS based on the first information; and
transmitting at least one of first CSI based on the second information and the CSI-RS and second CSI based on the third information and the CSI-RS, and
wherein N2 is smaller than N1.

14. A computer-readable storage medium including at least one computer programs causing at least one processor to perform operations,
wherein the operations include:
receiving first information related to a channel state information-reference signal (CSI-RS) associated with N1 antenna ports;
receiving second information related to first CSI reporting for the N1 antenna ports and third information related to second CSI reporting for N2 antenna ports, wherein both the first CSI reporting and the second CSI reporting are associated with the CSI-RS;
receiving the CSI-RS based on the first information; and
transmitting at least one of first CSI based on the second information and the CSI-RS and second CSI based on the third information and the CSI-RS, and
wherein N2 is smaller than N1.

15. A method of receiving channel state information (CSI) by a base station (BS) in a wireless communication system, the method comprising:
transmitting first information related to a channel state information-reference signal (CSI-RS) associated with N1 antenna ports;
transmitting second information related to first CSI reporting for the N1 antenna ports and third information related to second CSI reporting for N2 antenna ports, wherein both the first CSI reporting and the second CSI reporting are associated with the CSI-RS;
transmitting the CSI-RS based on the first information; and
receiving at least one of first CSI based on the second information and the CSI-RS and second CSI based on the third information and the CSI-RS through the at least one transceiver,
wherein N2 is smaller than N1.

16. A base station (BS) for receiving channel state information (CSI) in a wireless communication system, the BS comprising:
at least one transceiver;
at least one processor; and
at least one memory operably connected to the at least one processor and storing instructions which when executed, cause the at least one processor to perform operations,
wherein the operations include:
transmitting first information related to a channel state information-reference signal (CSI-RS) associated with N1 antenna ports through the at least one transceiver;
transmitting second information related to first CSI reporting for the N1 antenna ports and third information related to second CSI reporting for N2 antenna ports through the at least one transceiver, wherein both the first CSI reporting and the second CSI reporting are associated with the CSI-RS;
transmitting the CSI-RS based on the first information through the at least one transceiver; and
receiving at least one of first CSI based on the second information and the CSI-RS and second CSI based on the third information and the CSI-RS through the at least one transceiver, and
wherein N2 is smaller than N1.
